# EUROPÄISCHE PATENTANMELDUNG

(11) **EP 4 173 471 A1**
(43) Veröffentlichungstag der Anmeldung: **03.05.2023**
(21) Anmeldenummer: 22200452.5
(22) Anmeldetag: 10.10.2022
(51) Int. Cl.: A01F 15/08

(54) **VORRICHTUNG ZUM JUSTIEREN EINES KETTENRADES EINES KETTENTRIEBS**

(30) Priorität: 29.10.2021 DE 102021128386; 29.10.2021 DE 102021128389
(71) Anmelder: Deere & Company, Moline, IL 61265 (US)
(72) Erfinder: ZABE, MICKAEL, 68163 Mannheim (DE)
(74) Vertreter: Stein, Stefan

(57) **Zusammenfassung**

Es wird eine Vorrichtung (70) zum Justieren eines Kettenrades (58, 60, 62, 64, 66, 68) eines Kettentriebs (40, 44, 48) vorgeschlagen. Die Vorrichtung (70) umfasst einen Lagerzapfen (72), der ein freies Ende (76) und ein festes Ende (78) umfasst, einen auf dem Lagerzapfen (72) angeordnetes Rotationslager (74) und ein auf dem Rotationslager (74) geführtes Kettenrad (58, 60, 62, 64, 66, 68). Am Lagerzapfen (72) ist ein Anschlag (82) ausgebildet und zwischen dem Rotationslager (74) und dem Anschlag (82) ist wenigsten ein Federelement (94) angeordnet, wobei Vorspannmittel (107) vorgesehen sind, welche das Rotationslager (74) gegen das Federelement (94) vorspannen. Ferner wird ein Kettentrieb (40, 44, 48) zum Antreiben von Presswalzen (24, 26) oder Pressriemen einer Rundballenpresse (10) zum Pressen von Erntegut, mit wenigstens einer derartigen Vorrichtung (70) und eine Rundballenpresse (10) mit einem solchen Kettentrieb (40, 44, 48) vorgeschlagen.

## Beschreibung

Die Erfindung betrifft eine Vorrichtung zum Justieren eines Kettenrades eines Kettentriebs, insbesondere eines Kettentriebs zum Antreiben von Presswalzen oder Pressriemen einer Rundballenpresse zum Pressen von Erntegut. Die Vorrichtung umfasst einen Lagerzapfen, mit einem freien Ende und einem festen Ende, ein auf dem Lagerzapfen angeordnetes Rotationslager und ein auf dem Rotationslager geführtes Kettenrad.

Im Stand der Technik sind eine Vielzahl von Rundballenpressen bekannt, wobei zwischen Rundballenpressen mit fester und Rundballenpressen mit variabler Presskammer unterschieden wird. Rundballenpressen mit fester Presskammer zeichnen sich dadurch aus, dass über den Umfang einer definierten zylindrischen Presskammer eine Mehrzahl von Presswalzen angeordnet sind, die den Pressraum in Umfangsrichtung begrenzen. An den Stirnseiten wird der zylindrische Pressraum durch jeweilige Seitenwände begrenzt. Rundballenpressen mit variabler Presskammer zeichnen sich hingegen dadurch aus, dass der zylindrischer Pressraum durch einen oder mehrere Pressriemen in Umfangsrichtung begrenzt wird, wobei der Pressriemen über mehrere Walzen geführt wird. Durch Lageveränderung einer oder mehrerer Walzen während des Pressvorgangs gestaltet sich der Umfang des Pressraumes variabel. An den Stirnseiten wird der zylindrische Pressraum ebenfalls durch jeweilige Seitenwände begrenzt. Ferner ist es bekannt, sowohl die Presswalzen einer Rundballenpresse mit fester Presskammer, als auch die Walzen einer Rundballenpresse mit variabler Presskammer über einen Kettentrieb anzutreiben bzw. in Rotation zu bringen. Derartige Kettentriebe sind an einem Rahmen der Rundballenpresse an einer oder beiden Seitenwänden außerhalb des Pressraums angeordnet. Der Kettentrieb umfasst dabei mehrere Zahnräder bzw. Kettenräder, die mit den Presswalzen bzw. Walzen verbunden sind, wobei die Kettenräder über eine oder mehrere Antriebsketten in Antriebsverbindung stehen.

Eine derartige Rundballenpresse ist beispielsweise aus DE 196 32 762 A1 bekannt. Darin wird, eine Antriebsvorrichtung für die eine Presskammer umgrenzenden Presswalzen einer Rundballenpresse gezeigt, wobei mehrere Kettentriebe vorgesehen sind. Die einzelnen Kettentriebe dienen jeweils zum Antrieb einer Teilanzahl der insgesamt anzutreibenden Presswalzen, wobei Antriebskettenräder zum Antrieb der einzelner Kettentriebe gemeinsam antreibbar sind. Die zum Antreiben der Presswalzen bestimmten Kettenräder sind auf einem Kreisbogen in einem seitlichen Gehäuseteil der Rundballenpresse angeordnet und die Kettentriebe sind parallel zueinander angebracht.

Eine weitere Rundballenpresse aus dem Stand der Technik zeigt EP 2 952 089 A1, bei der mehrere Presswalzen um eine Presskammer herum angeordnet sind und durch einen Kettentrieb mit einer gemeinsamen Kette angetriebene Kettenräder tragen. Wenigstens eines der Kettenräder und die dazugehörige Presswalze weisen zusammenwirkende Führungsmittel, in Form einer Wellenaußenverzahnung an der Presswalze und einer damit zusammenwirkenden Nabeninnenverzahnung am Kettenrad, auf, die das Kettenrad und die Presswalze in Drehrichtung formschlüssig verbinden und eine Bewegung des Kettenrades in Axialrichtung der Presswalze zulassen. Außerdem sind Mittel zum Fixieren der axialen Position des Kettenrades in Form einer am Presswalzenstummel befestigten Wellenmutter und einer damit in Eingriff stehenden Außenverzahnung vorgesehen. Die hier offenbarte Ausgestaltung der Presswalzen und Kettenräder ist für antriebsübertragende Kettenräder geeignet, erweist sich jedoch als aufwändig in Kosten und Fertigung. Sie erfüllt jedoch das Erfordernis der axialen Verstellbarkeit der Kettenräder zur Feinjustierung innerhalb des Kettentriebs.

Bei den oben genannten Kettentrieben ist es üblich die Kette von einem Antriebskettenrad an die anzutreibenden Kettenräder der Presswalzen zu führen, wobei zum einen eine Kettenführung mit mehreren Windungen und schlaufenartigen Führungen der Kette erforderlich ist, insbesondere, um ein Verschwenken der Presswalzen zum Öffnen der Presskammer zu ermöglichen. Zum anderen muss ein derartiger Kettentrieb auf Spannung gehalten werden. Um dies zu ermöglichen sind in einem Kettentrieb der oben genannten Art, neben den anzutreibenden Kettenrädern, weitere Kettenräder angeordnet, die innerhalb des Kettentriebs zwecks der oben genannten Kettenführung als Umlenk- oder Führungskettenräder und/oder als Kettenräder zum Spannen des Kettentriebs dienen. Diese weiteren Kettenräder sind freilaufend und werden üblicherweise auf einem Rotationslager geführt, welches auf einem sich vom Rahmen der Rundballenpresse erstreckenden Lagerzapfen oder auf eine Lagerzapfen einer Kettenspannvorrichtung gelagert wird. Derartige freilaufende Kettenräder müssen ebenfalls, einer axialen Feinjustierung unterzogen werden, um präzise im Lauf der Kette zu liegen. Die Feinjustierung der an den Lagerzapfen gelagerten Kettenräder erfolgt üblicherweise mittels Abstandsscheiben, die beidseitig der Stirnseiten des Rotationslagers auf dem Lagerzapfen montiert werden, wie es beispielsweise von den Montagen der Kettentriebe an einer John Deere Rundballenpresse des Typs F441R bekannt ist. Diese Methode der axialen Feinjustierung gestaltet sich oftmals als sehr zeitaufwendig und kann mitunter das mehrmalige Montieren und Demontieren des Kettenrades am Lagerzapfen erfordern. Die Applikation der oben beschriebenen Lösung zum Feinjustieren von angetriebenen Kettenrädern ist für die axiale Feinjustierung eines freilaufenden und auf einem Rotationslager geführten Kettenrades ungeeignet bzw. nicht praktikabel.

Die der Erfindung zugrunde liegende Aufgabe wird darin gesehen, eine Vorrichtung zum axialen Feinjustieren eines freilaufenden Kettenrades eines Kettentriebs einer Rundballenpresse anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Vorrichtung der eingangs genannten Art derart ausgebildet, dass am Lagerzapfen ein Anschlag ausgebildet ist und zwischen dem Rotationslager und dem Anschlag wenigsten ein Federelement angeordnet ist, wobei Vorspannmittel angeordnet sind, welche das Rotationslager gegen das Federelement vorspannen. Die Anordnung eines Federelements zwischen dem Anschlag und dem Rotationslager einerseits sowie die Anordnung von Vorspannmittel, die das Rotationslager gegen das Federelement vorspannen ermöglicht ein präzises axiales Verschieben des Rotationslagers durch einfaches Verstellen der Vorspannmittel. Die Vorspannmittel sind vorzugsweise an dem freien Ende des Lagerzapfens angeordnet und spannen das Rotationslager gegen das Federelement. Das Federelement ist vorzugsweise als Kompressionselement ausgebildet, welches durch Kompression eine Federspannung aufbaut. Die durch die Vorspannmittel einstellbare Vorspannung am Federelement wird vorzugsweise so gewählt, dass die Federungsspanne bzw. die Verformung des Federelements nicht gänzlich ausgeschöpft wird, sich jedoch eine gewisse Federspannung aufgebaut hat. Dadurch wird erzielt, dass durch Erhöhen der Vorspannung das Rotationslager weiter in Richtung des Federelements bzw. in Richtung des festen Endes des Lagerzapfens bewegt wird. Durch Reduzieren der Vorspannung wird hingegen das Rotationslager vom Federelement in Richtung des freien Endes des Lagerzapfens bewegt. Eine axiale Feinjustierung des Kettenrades wird damit unabhängig von einer Stärke (oder Dicke) einer Abstandsscheibe ermöglicht. Eine aufwändige Demontage des Kettenrades bzw. des Rotationslagers vom Lagerzapfen, um beispielsweise eine stärkere oder dünnere Abstandsscheibe zwischen Kettenrad und Rahmen zu platzieren, entfällt.

Der Anschlag kann am festen Ende des Lagerzapfens ausgebildet sein, das bedeutet er kann durch das den Lagerzapfen tragende Bauteil selbst gebildet werden. In diesem Fall würde sich das Federelement einerseits gegen das den Lagerzapfen tragende Bauteil und andererseits gegen das Rotationslager abstützen, sofern keine weiteren Bauteile, wie beispielsweise Abstandshülsen oder Abstandsscheiben zwischen dem Federelement und dem Anschlag bzw. dem Rotationslager angeordnet sind.

Vorzugsweise ist der Anschlag jedoch durch einen Wellenabsatz vorgegeben, der am Lagerzapfen zwischen dem Rotationslager und dem festen Ende eingearbeitet ist. In diesem Fall stützt sich das Federelement gegen den Wellenabsatz ab, sofern keine weiteren Bauteile, wie beispielsweise Abstandshülsen oder Abstandsscheiben zwischen dem Federelement und dem Wellenabsatz bzw. dem Rotationslager angeordnet sind.

Der Anschlag kann beispielsweise auch durch einen Sprengring gebildet werden, der in einer am Lagerzapfen zwischen dem Rotationslager und dem festen Ende ausgebildeten Ringnut eingefasst ist.

Ferner ist es möglich, den Anschlag durch eine Gewindemutter auszubilden, die auf einem am Lagerzapfen zwischen dem Rotationslager und dem festen Ende des Lagerzapfens ausgebildeten Außengewinde angeordnet ist. Dadurch würde ein verstellbarer Anschlag bereitgestellt werden, wodurch der axiale Verstellweg des Rotationslagers bzw. des Kettenrades durch Verstellen der Gewindemutter zusätzlich variierbar ist.

Die Vorspannmittel können eine am freien Ende des Lagerzapfens befestigte Spannplatte umfassen, wobei das Rotationslager auf dem Lagerzapfen zwischen der Spannplatte und dem Federelement eingespannt ist. Die Spannplatte kann beispielsweise durch eine Spannschraube am freien Ende des Lagerzapfens befestigt sein, wobei die Spannschraube von einem am freien Ende des Lagerzapfens ausgebildeten Innengewinde aufgenommen ist. Das Rotationslager ist dadurch auf dem Lagerzapfen zwischen dem Absatz bzw. Federelement und der Spannplatte eingespannt ist.

Die Vorspannmittel können alternativ eine auf einem Außengewinde am freien Ende des Lagerzapfens angeordnete Gewindemutter umfassen, wobei das Rotationslager auf dem Lagerzapfen zwischen der Gewindemutter und dem Anschlag bzw. Federelement eingespannt ist.

Die Vorspannmittel können ferner ein oder mehrere Abstandselemente umfassen, welche zwischen der Spannplatte und dem Rotationslager beziehungsweise zwischen der Gewindemutter und dem Rotationslager angeordnet sind. Mittels der genannten Abstandselemente kann die Vorrichtung auf die Größe der Rotationslager als auch auf die Geometrie des Federelements angepasst werden. Die Abstandselemente können als Buchse, Hülse oder Scheibe ausgebildet sein.

Vorzugsweise ist das Federelement als Tellerfeder ausgebildet. Dabei können eine oder mehrere in Reihe angeordnete Tellerfedern vorgesehen sein, um den Federweg und/oder die Federspannung zu optimieren. An Stelle von Tellerfedern können auch andere Federelemente, die durch Kompression eine Federspannung erzeugen Verwendung finden.

Die oben beschriebene Vorrichtung eignet sich besonders für den Einsatz in einem Kettentrieb zum Antreiben von Presswalzen oder Pressriemen einer Rundballenpresse zum Pressen von Erntegut. Die Vorrichtung kann dabei an einem oder auch an mehreren Kettenrädern des Kettentriebs zum Einsatz kommen.

Der oben genannte Kettentrieb ist in vielerlei Arten von landwirtschaftlichen Maschinen einsetzbar, in denen Rollen, Walzen, Trommeln oder andere Rotationskörper angetrieben werden müssen. Er eignet sich jedoch besonders für den Einsatz in einer Rundballenpresse mit einem Rahmen, einem Pressraum und am Rahmen angeordnete und den Pressraum umgebende Presswalzen oder Pressriemen zum Pressen von Erntegut, wobei der Kettentrieb am Rahmen und/oder einer Seitenwand der Rundballenpresse zum Antreiben der Presswalzen oder des Pressriemens angeordnet ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
Fig. 1 eine schematische Seitenansicht einer Rundballenpresse mit einem Kettentrieb zum Antreiben von Presswalzen
Fig. 2 eine schematische Querschnittsansicht einer Vorrichtung zum Justieren eines Kettenrades des Kettentriebs aus Figur 1 und
Fig. 3 eine schematische Querschnittsansicht einer alternativen Form einer Vorrichtung zum Justieren eines Kettenrades des Kettentriebs aus Figur 1.
Fig. 4 eine schematische Querschnittsansicht einer weiteren alternativen Form einer Vorrichtung zum Justieren eines Kettenrades des Kettentriebs aus Figur 1.
Fig. 5 eine schematische Querschnittsansicht einer weiteren alternativen Form einer Vorrichtung zum Justieren eines Kettenrades des Kettentriebs aus Figur 1.
Fig. 6 eine schematische Querschnittsansicht einer weiteren alternativen Form einer Vorrichtung zum Justieren eines Kettenrades des Kettentriebs aus Figur 1.

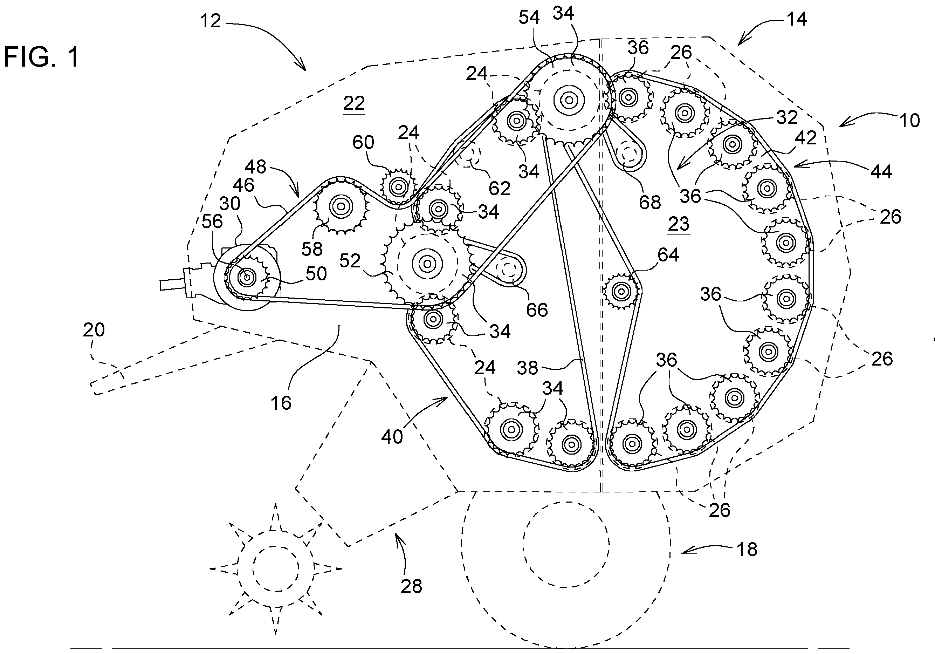

Eine in Figur 1 dargestellte Rundballenpresse 10 weist einen vorderen Teil 12 und einen rückwärtigen Teil 14 auf.

Die Rundballenpresse 10 umfasst ferner einen Rahmen 16, ein Fahrwerk 18, eine Deichsel 20, Seitenwände 22 am vorderen Teil 12, Seitenwände 23 am hinteren Teil 14, Presswalzen 24 am vorderen Teil 12, Presswalzen 26 am hinteren Teil 14, einen Zuführzusammenbau 28 zur Aufnahme eines Ernteguts und eine Antriebsvorrichtung 30.

Der Rahmen 16 besteht aus Streben und dergleichen, die die vorgenannten Komponenten zusammenhalten und tragen und somit den vorderen Teil 12 zu einer Einheit formen.

Das Fahrwerk 18 setzt sich nicht näher bezeichnet aus einer Achse und daran angebrachten Rädern zusammen, die sich im unteren rückwärtigen Bereich des vorderen Teils 12 befinden und die gesamte Rundballenpresse 10 auf dem Boden fahrbar abstützen.

Die Deichsel 20 dient dem Anschluss der Rundballenpresse 10 an einem Zugfahrzeug, z. B. an einem Ackerschlepper, und ist fest mit dem Rahmen 16 verbunden.

Die Seitenwände 22, 23 sind ebenfalls fest mit dem Rahmen 16 verbunden und schließen eine Presskammer 32 stirnseitig ab. Die Seitenwände 22, 23 nehmen hierzu einen Abstand zueinander ein und nehmen die Presswalzen 24 und 26 beweglich auf. Im oberen rückwärtigen Bereich des vorderen Teils 12 ist ein Lager (nicht gezeigt) vorgesehen, das dem vertikal schwenkbaren Anschluss des rückwärtigen Teils 14 dient. Die Seitenwände 22, 23 sind durch nicht näher bezeichnete aber hinlänglich bekannte Querstreben miteinander verbunden.

Die Presswalzen 24 und 26 sind in bekannter Weise aus einem Blechmantel und einer Welle oder Wellenstummeln zusammengesetzt. Die Mittelpunkte der Presswalzen 24 und 26, d. h. deren Drehachsen liegen im Wesentlichen auf einem Teil eines Kreises, der die Presskammer 32 umgibt. Auf wenigstens einer Seite der Rundballenpresse 10 sind auf der Außenseite der Seitenwände 22, 23 am vorderen Teil 12 auf den Presswalzen 24 Kettenräder 34 und am hinteren Teil 14 auf den Presswalzen 26 Kettenräder 36 vorgesehen. Die Kettenräder 34 der Presswalzen 24 sind von einer Antriebskette 38 eines ersten Kettentriebs 40 umgeben. Die Kettenräder 36 der Presswalzen 26 sind von einer Antriebskette 42 eines zweiten Kettentriebs 44 umgeben. Eine weitere Antriebskette 46 eines dritten Kettentriebs 48 dient zum Antreiben des ersten und zweiten Kettentriebs 40 und 44. Der dritte Kettentrieb 48 wird von einem Hauptantriebskettenrad 50, welches mit der Antriebsvorrichtung 30 verbunden ist angetrieben. Der dritte Kettentrieb 48 treibt ein erstes Antriebskettenrad 52 an, welches zum Antreiben des ersten Kettentriebs 40 dient. Der dritte Kettentrieb 48 treibt ferner auch ein zweites Antriebskettenrad 54 an, welches zum Antreiben des zweiten Kettentriebs 44 dient. Das erste und zweite Antriebskettenrad 52 und 54 sind jeweils doppelt verzahnt, wobei eine erste Verzahnung des ersten Antriebskettenrad 52 und eine erste Verzahnung des zweiten Antriebskettenrad 54 mit dem dritten Kettentrieb 48 in Verbindung stehen. Eine zweite Verzahnung des ersten Antriebskettenrades 52 steht mit dem ersten Kettentrieb 40 in Verbindung und treibt diesen an. Eine zweite Verzahnung des zweiten Antriebskettenrades 54 steht mit dem zweiten Kettentrieb 44 in Verbindung und treibt diesen an.

Die Antriebsvorrichtung 28 wird auf nicht gezeigte Weise von dem Zugfahrzeug, z. B. über eine Gelenkwelle, gespeist und enthält im rückwärtigen Bereich der Deichsel 20 eine quer verlaufende Welle 56. Von der Welle 56 geht das Hauptantriebskettenrad 50 aus, welches den dritten Kettentrieb 48 antreibt.

Die Kettentriebe 40, 44 und 48 werden über zusätzliche Kettenräder 58, 60, 62, 64 und mittels nicht näher bezeichneter Spannvorrichtungen gespannt. Ferner sind für den ersten Kettentrieb 40 ein Kettenrad 66 und für den zweiten Kettentrieb 44 ein Kettenrad 68 zur Führung bzw. Umlenkung der jeweiligen Antriebsketten 38, 42 vorgesehen.

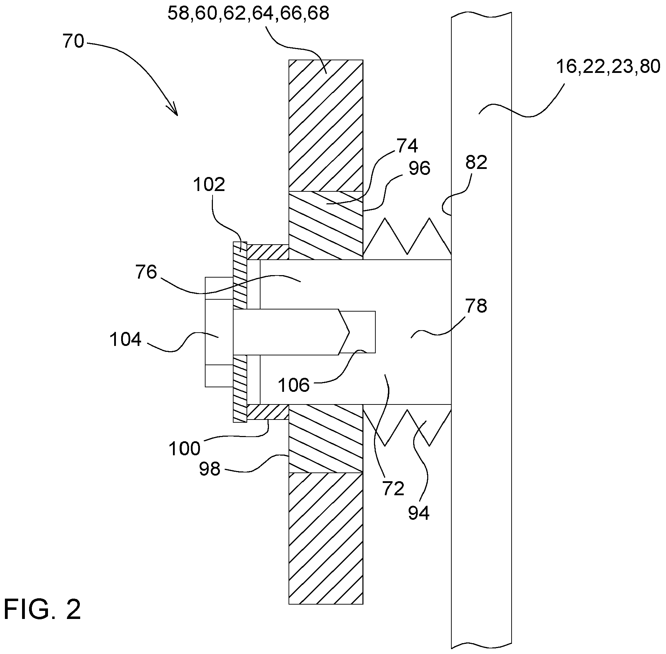

In den Figuren 2 bis 6 sind jeweils Vorrichtungen 70 zum Justieren der zusätzlichen Kettenräder 58, 60, 62, 64, 66 und 68 gezeigt, wobei die Kettenräder 58, 60, 62, 64, 66 und 68 jeweils auf einem Lagerzapfen 72 einer derartigen Vorrichtung 70 angeordnet sind. Neben dem Lagerzapfen 72 und einem der zu justierenden Kettenräder 58, 60, 62, 64, 66 und 68, umfasst die Vorrichtung 70 ein auf dem Lagerzapfen 72 angeordnetes Rotationslager 74 und das auf dem Rotationslager 74 geführte Kettenrad 58, 60, 62, 64, 66 und 68. Der Lagerzapfen 72 umfasst ein freies Ende 76 und ein festes Ende 78. Letzteres ist an den Rahmen 16, an die Seitenwände 22, 23 oder an einen Spannarm 80 einer Spannvorrichtung (nicht näher bezeichnet) befestigt. Die Befestigung des Lagerzapfens 72 kann auf demontierbare (lösbare) Weise in beliebiger Form oder auf nicht lösbare Weise, beispielsweise durch Schweißen oder durch eine im Gieß- oder Schmiedeverfahren des Spannarms 80 hergestellte Verbindung erfolgen. Der Lagerzapfen 72 weist einen Anschlag 82 auf, der auf verschiedene Art und Weise ausgebildet sein kann, wie in den Figuren 2 bis 5 dargestellt wird.

Gemäß Figur 2 wird der Anschlag 82 durch das den Lagerzapfen tragende Bauteil, hier der Rahmen 16, die Seitenwände 22, 23 oder der Spannarm 80 einer Spannvorrichtung gebildet.

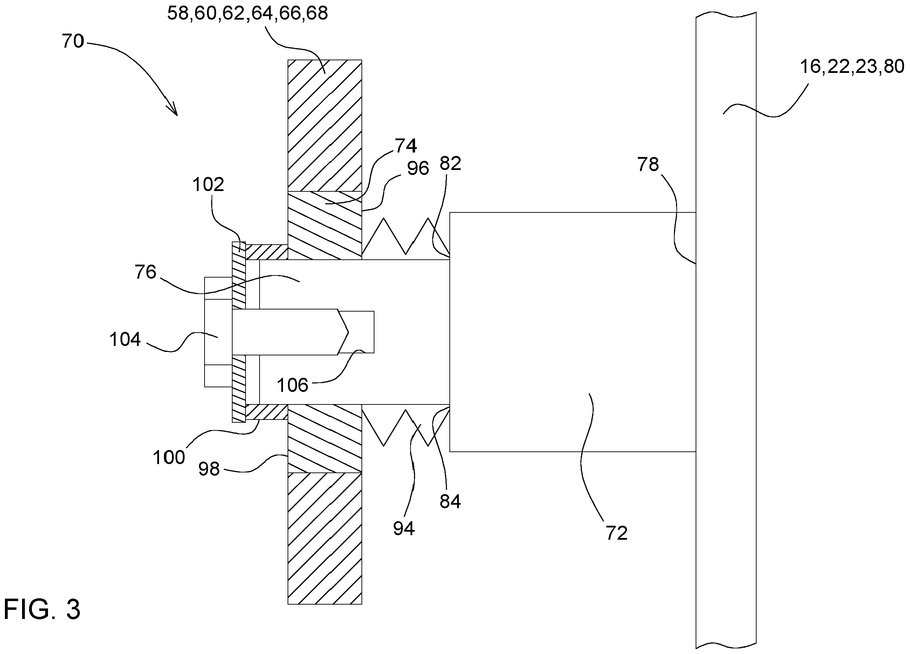

Gemäß Figur 3 kann der Anschlag 82 auch durch einen am Lagerzapfen 72 ausgebildeten Wellenabsatz 84 geformt sein.

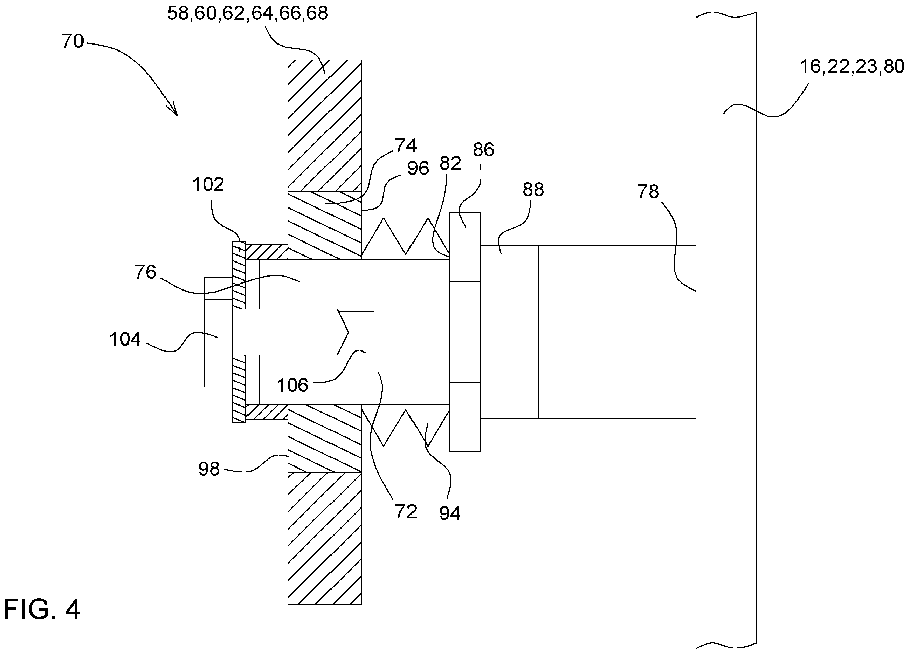

Gemäß Figur 4 wird der Anschlag 82 durch eine Gewindemutter 86 gebildet, die auf einem Außengewindebereich 88 am Lagerzapfen 72 zwischen Rotationslager 74 und dem festen Ende 78 des Lagerzapfens 72 geführt wird.

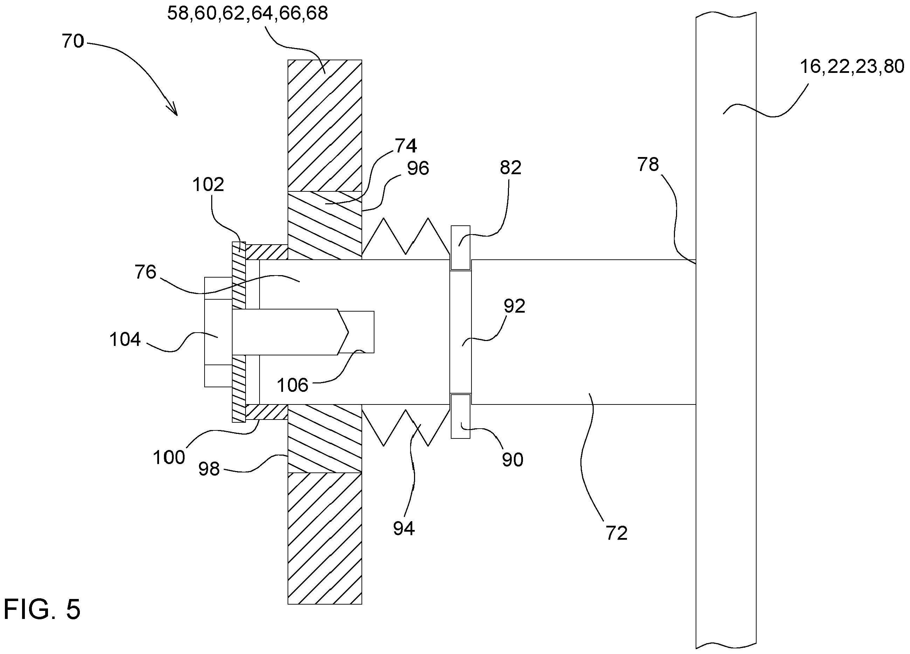

Gemäß Figur 5 wird der Anschlag 82 durch einen Sprengring 90 gebildet, der in einer Ringnut 92 am Lagerzapfen 72 zwischen Rotationslager 74 und dem festen Ende 78 des Lagerzapfens 72 geführt wird.

Wie in den Figuren 2 bis 6 gezeigt ist, sind zwischen dem Rotationslager 74 und dem jeweiligen Anschlag 82 Federelemente 94 in Form von Tellerfedern angeordnet, die sich einerseits am Anschlag 82 und andererseits an einer dem festen Ende 78 des Lagerzapfens 72 zugewandten Stirnfläche 96 des Rotationslagers 74 abstützen.

Auf einer entgegengesetzten Stirnfläche 98 des Rotationslagers 74 schließt sich ein Abstandselement 100 an, welches von einer Spannplatte 102 gegen die Stirnfläche 98 des Rotationslagers 74 gepresst wird. Die Spannplatte 102 wird von einer Spannschraube 104 gehalten bzw. gegen das Abstandselement 100 gepresst. Die Spannschraube 104 ist in einem am freien Ende 76 des Lagerzapfens 72 ausgebildeten Innengewinde 106 geführt.

Vorspannmittel 107 werden damit gemäß den Figuren 2 bis 5 durch das Innengewinde 106, die Spannschraube 104, die Spannplatte 102 und dem Abstandselement 100 bereitgestellt. Das Rotationslager 74 ist zwischen dem Abstandselement 100 und dem Federelement 94 eingespannt ist und eine Vorspannung wird durch Spannen der Spannschraube 104 gegen die Spannplatte 102 bzw. gegen das Abstandselement 100 im Zusammenspiel mit dem Federelement 94 bzw. mit einer Kompression der Tellerfedern erzeugt. Je nach Spannungsgrad wird das Rotationslager 74 axial in die eine oder andere Richtung entlang des Lagerzapfens 72 bewegt wird, wobei der Spannungsgrad bzw. die Vorspannung durch Eindrehen oder Herausdrehen der Spannschraube 104 variierbar ist und damit eine axiale Justierung des Rotationslagers 74 und des darauf geführten Kettenrades 58, 60, 62, 64, 66, 68 herbeigeführt werden kann.

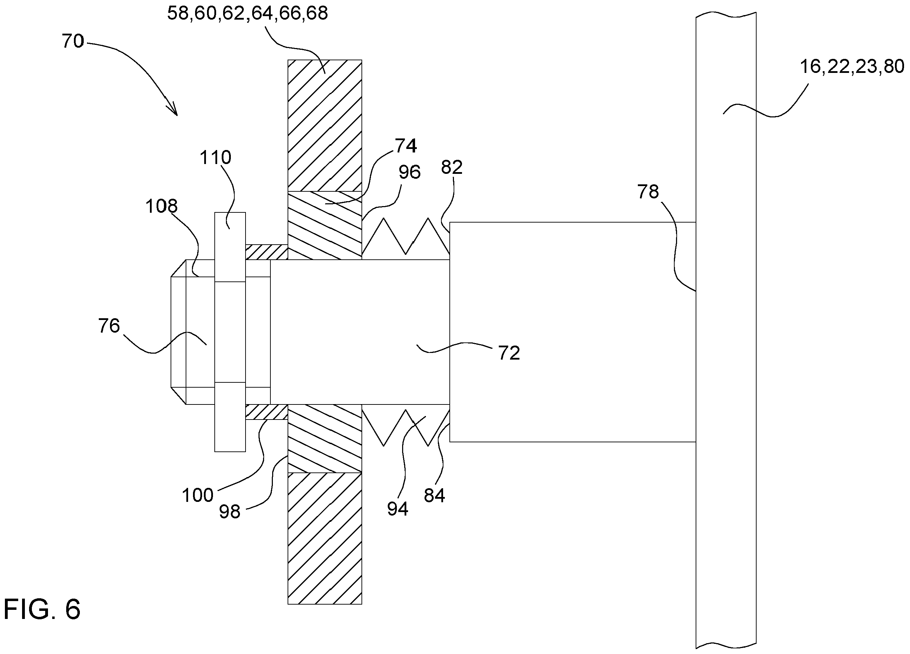

In einer alternativen Ausführungsform, die in Figur 6 abgebildet ist, werden die Vorspannmittel 107, in Bezug auf das Innengewinde 106, die Spannschraube 104 und die Spannplatte 102 aus den Figuren 2 bis 5, durch ein am freien Ende 76 des Lagerzapfens 72 ausgebildetes Außengewinde 108 und eine darauf geführte Gewindemutter 110 bereitgestellt, wobei das Abstandselement 100 durch die Gewindemutter 110 gegen die Stirnfläche 98 gepresst wird. Das Außengewinde 108 im Zusammenspiel mit der Gewindemutter 110 und dem Abstandselement 100 entfalten dabei dieselbe technische Wirkung wie die oben beschriebenen Vorspannmittel 107 aus den Figuren 2 bis 5.

Die in den Ausführungsbeispielen gezeigten Abstandselemente 100 sind in Form einer Abstands- oder Distanzhülse bzw. -buchse vorgesehen. Die Abstandselemente 100 können hier auch als Distanz- bzw. Unterlegscheiben ausgebildet sein. Ferner ist es durchaus denkbar, dass auch zwischen dem Federelement 94 und der Stirnfläche 96 des Rotationslagers 74 oder auch dem Anschlag 82 Abstandselemente 100 vorgesehen sind.

Im Falle des in Figur 4 gezeigten Ausführungsbeispiels ist es ferner denkbar, dass ein Federelement 94 auf der entgegengesetzten Stirnfläche 96 vorgesehen ist und die Vorspannfunktion durch Verstellen der Gewindemutter 86 herbeigeführt wird. In einem solchen Fall könnte die Anordnung eines Federelements 94 an der Stirnfläche 98 entfallen und gegebenenfalls durch ein Abstandselement 100 auf dieser Seite des Rotationslagers 74 ersetzt werden.

## Patentansprüche

1. Vorrichtung (70) zum Justieren eines Kettenrades (58, 60, 62, 64, 66, 68) eines Kettentriebs (40, 44, 48), mit einem Lagerzapfen (72), der ein freies Ende (76) und ein festes Ende (78) umfasst, einem auf dem Lagerzapfen (72) angeordneten Rotationslager (74) und einem auf dem Rotationslager (74) geführten Kettenrad (58, 60, 62, 64, 66, 68), **dadurch gekennzeichnet, dass** am Lagerzapfen (72) ein Anschlag (82) ausgebildet ist und zwischen dem Rotationslager (74) und dem Anschlag (82) wenigsten ein Federelement (94) angeordnet ist, wobei Vorspannmittel (107) angeordnet sind, welche das Rotationslager (74) gegen das Federelement (94) vorspannen.

2. Vorrichtung (70) nach Patentanspruch 1, wobei der Anschlag (82) am festen Ende (78) des Lagerzapfens (72) ausgebildet ist.

3. Vorrichtung (70) nach Patentanspruch 1, wobei der Anschlag (82) einen Wellenabsatz (84) umfasst, der am Lagerzapfen (72) zwischen dem Rotationslager (74) und dem festen Ende (78) ausgebildet ist.

4. Vorrichtung (70) nach Patentanspruch 1, wobei der Anschlag (82) einen Sprengring (90) umfasst, der in einer am Lagerzapfen (72) zwischen dem Rotationslager (74) und dem festen Ende (78) ausgebildeten Ringnut (92) eingefasst ist.

5. Vorrichtung (70) nach Patentanspruch 1, wobei der Anschlag (82) eine Gewindemutter (86) umfasst, die auf einem am Lagerzapfen (72) zwischen dem Rotationslager (74) und dem festen Ende (78) des Lagerzapfens (72) ausgebildeten Außengewinde (88) angeordnet ist.

6. Vorrichtung (70) nach einem der Patentansprüche 1 bis 5, wobei die Vorspannmittel (107) eine am freien Ende des Lagerzapfens (72) befestigte Spannplatte (102) umfassen, wobei das Rotationslager (74) auf dem Lagerzapfen (72) zwischen der Spannplatte (102) und dem Federelement (94) eingespannt ist.

7. Vorrichtung (70) nach einem der Patentansprüche 1 bis 5, wobei die Vorspannmittel (107) eine auf einem Außengewinde (108) am freien Ende (76) des Lagerzapfens (72) angeordnete Gewindemutter (110) umfassen, wobei das Rotationslager (74) auf dem Lagerzapfen (72) zwischen der Gewindemutter (110) und dem Federelement (94) eingespannt ist.

8. Vorrichtung (70) nach Patentanspruch 6 oder 7, wobei die Vorspannmittel (107) ein Abstandselement (100) umfassen, welches zwischen der Spannplatte (102) und dem Rotationslager (74) beziehungsweise zwischen der Gewindemutter (110) und dem Rotationslager (74) angeordnet ist.

9. Vorrichtung (70) nach einem der Patentansprüche 1 bis 8, wobei das Federelement (94) als Tellerfeder ausgebildet ist.

10. Kettentrieb (40, 44, 48) zum Antreiben von Presswalzen (24, 26) oder Pressriemen einer Rundballenpresse (10) zum Pressen von Erntegut, mit wenigstens einer Vorrichtung (70) nach einem der vorrangehenden Patentansprüche.

11. Rundballenpresse (10) mit einem Rahmen (16), einem Pressraum (32) und am Rahmen (16) angeordnete und den Pressraum (32) umgebende Presswalzen (24, 26) oder Pressriemen zum Pressen von Erntegut und einem am Rahmen (16) angeordneten Kettentrieb (40, 44, 48) nach Anspruch 10 zum Antreiben der Pressrollen (24, 26) oder des Pressriemens.
